# FASCICULE DE BREVET EUROPEEN

(11) **EP 3 413 700 B1**
(45) Date de publication et mention de la délivrance du brevet: **14.04.2021**
(21) Numéro de dépôt: 17704313.0
(22) Date de dépôt: 07.02.2017
(51) Int. Cl.: A01D 46/00, A01D 51/00

(54) **DISPOSITIF DE COLLECTE DE VÉGÉTAUX**
VORRICHTUNG ZUM AUFSAMMELN VON PFLANZEN
DEVICE FOR COLLECTING PLANTS

(30) Priorité: 08.02.2016 FR 1650973
(43) Date de publication de la demande: 19.12.2018
(73) Titulaire: Ream Agri, 30132 Caissargues (FR)
(72) Inventeur: RETAUX, Jacques, 84750 Caseneuve (FR)
(74) Mandataire: Ipside
(86) Numéro de dépôt international: PCT/IB2017/050650
(87) Numéro de publication internationale: WO 2017/137889

(56) Documents cités:
- EP-A1- 0 053 570
- FR-A1- 2 681 215
- US-A- 3 964 245
- US-A- 3 986 324

## Description

La présente invention concerne un dispositif de collecte de végétaux tels que des melons.

### DOMAINE TECHNIQUE

L'invention se situe dans le domaine technique du ramassage de végétaux, elle s'applique de manière principale à la collecte de melons détachés de la plante, toutefois le dispositif pour être également utilisé pour d'autres légumes de forme sensiblement sphérique, et notamment d'autres cucurbitacées tels que la pastèque ou la courge.

### ART ANTERIEUR

A ce jour la récolte de melons dans les melonnières se fait essentiellement de manière manuelle. Pendant la période de récolte, les ouvriers agricoles parcourent les raies des melonnières et collectent les fruits arrivés à maturité.

La récolte des melons nécessite une main d'œuvre importante, il faut en effet transporter dans des seaux les melons coupés vers leur caisse de stockage ou palox, opération longue et fastidieuse.

Pour limiter les allers retours, on utilise des plateformes motorisées suivant le récoltant, ces dernières présentent différents inconvénients et notamment ne permettent pas une cadence de récolte importante.

Pour pallier aux inconvénients précités, l'inventeur de la présente demande a déposé une demande FR2681215 relative à une machine à ramasser les melons. Cette machine comporte d'une part une tête de ramassage fixée sur un convoyeur avec un tapis directeur et des cylindres permettant de saisir le melon se trouvant au sol et d'autre part un convoyeur fixé sur un tracteur et équipé d'un palpeur, d'une rampe, de roues et d'un tapis de retenue.

Cette machine est satisfaisante sur un terrain relativement dur et plan. Toutefois, son fonctionnement est perfectible lorsque le champ présente des irrégularités ou lorsque le terrain varie en densité. Plus précisément, compte tenu de sa structure, le poids de la machine est répartie sur les roues et sur la tête de ramassage.

La force importante exercée par la tête de ramassage sur le sol fait que cette dernière peut s'enfoncer dans le sol lorsque ce dernier est meuble et empêcher le ramassage des melons.

Notamment la rampe de la machine qui poussée en direction des melons peut s'enfoncer dans la terre trop meuble ou dans une bosse de terre. Lorsque la densité du sol varie il n'est pas possible d'effectuer un réglage adaptatif de sorte que l'utilisation de cette machine n'est possible que sur un sol bien plan et de densité constante.

La présente invention constitue un perfectionnement à la machine à ramasser les melons décrite dans la demande FR2681215.

### OBJET DE L'INVENTION

Un premier but de la présente invention est de résoudre tout ou partie des problèmes techniques liés à l'art antérieur précité.

Un autre but de la présente invention est de proposer un dispositif de collecte de végétaux permettant une vitesse de collecte de l'ordre de 2 à 5km/h en fonction de la densité de la collecte.

Un autre but de la présente invention est de proposer un dispositif de collecte de végétaux adapté à des terrains présentant des reliefs modérés et une densité de sol variable.

Un autre but de la présente invention est de proposer un dispositif de collecte de végétaux permettant de récolter des fruits sur le sol et de les transférer vers un palox en limitant les risques de dégradations de chaque végétal.

### RESUME DE L'INVENTION

La présente invention concerne un dispositif de collecte de végétaux comportant les caractéristiques de la revendication 1.

### BREVE DESCRIPTION DES FIGURES

La présente invention sera mieux comprise à la lecture d'un exemple détaillé de réalisation en référence aux figures annexées, fournies à titre d'exemple non limitatif, parmi lesquels :
- la figure 1 représente un exemple de réalisation schématique selon une vue latérale d'un dispositif conforme à l'invention,
- la figure 2 représente en vue schématique selon une vue du dessus d'un détail de réalisation de l'installation,
- la figure 3 représente en vue schématique, un détail de réalisation noté I à la figure 1 selon trois configurations différentes.

### DESCRIPTION DETAILLEE DE L'INVENTION

La présente invention vise à protéger un dispositif de collecte de végétaux tels que des melons. Les melons sont au préalable sélectionnés et coupés lorsqu'arrivés à maturité puis placés par l'ouvrier agricole selon, sensiblement, une ligne de ramassage généralement constituée par l'espace entre les melonnières.

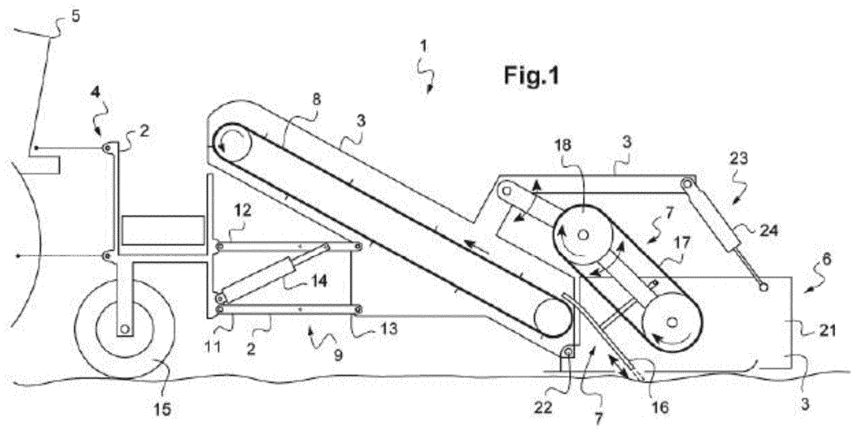

En se reportant à la figure 1, on voit représenté un dispositif de collecte de végétaux 1.

Ce dispositif de collecte 1 comporte un châssis 2, une unité de collecte 3, et des moyens d'assujettissement 4aptes à permettre la liaison du châssis à 2 un véhicule agricole 5.

Le véhicule agricole 5 tel que partiellement représenté à la figure 1 peut être un tracteur ou encore tout type d'engin motorisé adapté au déplacement dans les champs.

L'unité de collecte 3 comporte des moyens de guidage 6 des végétaux et des moyens de transfert 7 des végétaux sur un convoyeur et, au moins un convoyeur 8.

Le châssis 2 comprend des moyens de support 9 de l'unité de collecte 3. Ces moyens de support 9 permettent de soulever en tout ou partie l'unité de collecte 3. De manière pratique 70 à 100 % de la charge de l'unité de collecte 3 est reprise par les moyens de support 9. De la sorte, le poids de l'unité de collecte 3 reposant sur le sol, au niveau de la zone de collecte, est minime et permet le glissement d'au moins un patin 10 situé au niveau de la zone de collecte.

Plus précisément, en se reportant à la figure 1, les moyens de support 9, permettant de placer l'unité de collecte 3 en porte à faux comportent une structure de sustentation 11

Ladite structure 11 comprend des bras supérieurs 12 et inférieurs 13 reliés par au moins un vérin 14 permettant l'amortissement et le réglage en fonction de la charge de l'unité de collecte 3. Ce vérin 14 peut être réglé de manière automatique ou optionnellement piloté par le conducteur du véhicule 5 ou de l'opérateur chargé de la surveillance de la collecte.

La structure de sustentation 11, notamment présentant une section en parallélogramme, permet, en reprenant tout ou partie du poids de l'unité de collecte 3, de limiter la force exercée par l'unité de collecte 3 sur le sol

Par ailleurs, on voit que les roues 15 du châssis 2 sont au niveau de la liaison avec le véhicule agricole 5, c'est-à-dire à l'opposé des moyens de guidage 6 et de transfert 7, Cette disposition permet de limiter l'amplitude des mouvements au niveau des moyens de guidage 6 lors du passage d'une bosse ou autre irrégularité de terrain.

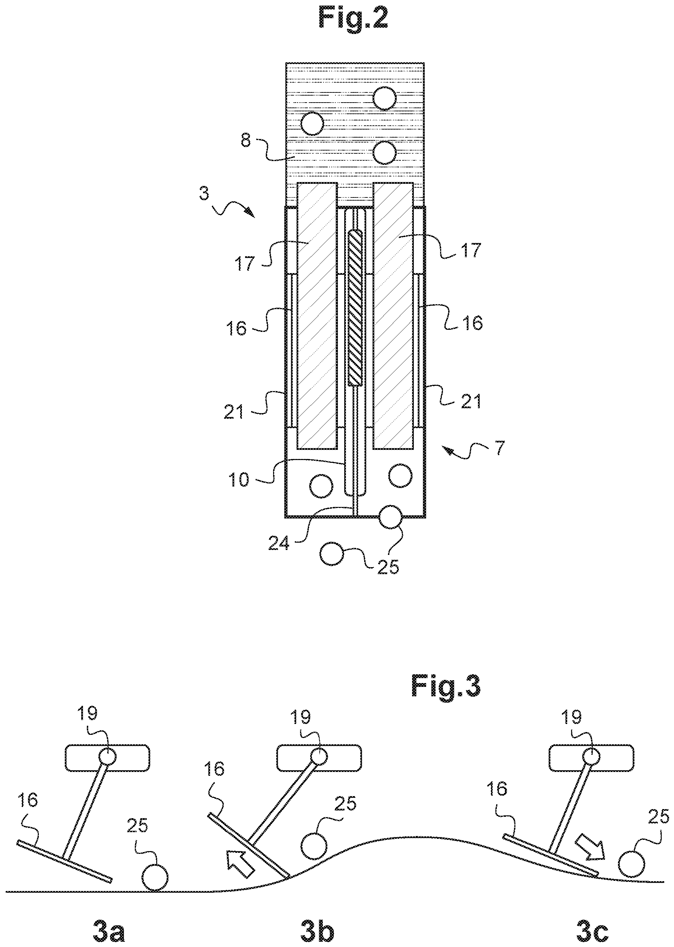

La figure 2 représente en vue de dessus une extrémité de l'unité de collecte 3 avec les moyens de guidage 6, les moyens de transfert 7 et le convoyeur 8. En se reportant à la figure 2, on voit que le dispositif 1 comprend au niveau des moyens de transfert 7 une rampe 16.

Cette rampe 16 permet de soulever les melons qui sont ensuite remontés le long de la rampe 16 par une bande de transfert 17 entrainée par deux cylindres motorisés 18 puis vers le convoyeur 8.

Cette rampe 16 est montée sur un axe pivot 19 permettant son relèvement dans la direction opposée au déplacement du dispositif de collecte, en cas de butée de la rampe sur le sol.

En se reportant à la figure 3, on voit le déplacement de la rampe 16 en cas d'obstacle ou d'irrégularité du terrain. Dans chacune des configurations la rampe 16 est en position optimale pour venir soulever un légume à collecter.

Dans la première configuration 3a, la rampe 16 est en amont de la bosse 20. Dans la seconde configuration 3b la rampe 16 est en contact cette fois avec la bosse 20, ce qui fait pivoter la rampe 16 vers l'arrière autour de son axe pivot 19. De cette manière, la rampe 16 ne se plante pas dans le sol et reste en capacité de soulever un légume 25.

Dans la troisième configuration 3c, la rampe 16 revient par gravité à la position initiale 3a et se retrouve également en position optimale pour collecter autre légume 25.

En se reportant à nouveau à la figure 2, on voit que les moyens de guidage 6 comportent au moins un patin 11 apte à glisser sur le sol et des parois de guidage 21 permettant de guider les végétaux vers la rampe 16.

Ces parois de guidage 21 peuvent être sensiblement parallèles entre elles ou inclinées de manière à constituer un entonnoir en direction de la rampe 16.

Selon un aspect particulier de l'invention, les moyens de guidage 21 comportent une liaison pivot 22 avec l'unité de collecte 3. Les moyens de guidage 6 comportent en outre des moyens de réglage 23 de la position angulaire permettant de cabrer les moyens de guidage 6 par rapport au sol.

Cette disposition est particulièrement importante puisqu'elle permet de s'adapter à la densité du sol. Le réglage s'effectue en cabrant les moyens de guidage d'un angle compris entre 0 et 10 degrés par rapport au sol, en fonction de la densité de la terre, le cabrage étant augmenté lorsque la densité du sol diminue.

Pour ce faire, on prévoit au niveau de l'unité de collecte que les moyens de réglage 23 comportent au moins un second vérin 24 permettant de pivotement des moyens de guidage 6 et notamment des parois de guidage 21 autour de leur point de pivot. Notons à ce niveau que le cabrage peut être soit ajusté avant le démarrage de la récolte en fonction de l'état du champ devant être récolté ou éventuellement en temps réel par l'opérateur en charge de la collecte.

De manière avantageuse, et tels que visibles à la figure 2, les moyens de guidage 6 comportent un seul patin 11, disposé entre les parois de guidage 21.

Cette disposition permet de s'affranchir des problèmes de stabilisation de patins disposés au niveau de chaque paroi de guidage 21 dus aux ornières souvent présentes au niveau des raies des melonnières.

Le dispositif de collecte tel que décrit plus haut permet de récolter de manière efficace et sure les légumes même en cas d'irrégularités du sol tant en terme de différence de densités que de différences de niveaux.

Pour perfectionner la récolte et le stockage des légumes, on prévoit en outre un système d'aspiration des végétaux sur le convoyeur apte. Ce système, non représenté dans les figures annexées permet de transférer les végétaux du convoyeur vers une zone de stockage telle qu'une benne.

Ce système comprend un tube semi-rigide couplé à une aspiration permettant d'aspirer les légumes. La sortie du tube débouche en aval à l'aplomb de la zone de stockage. Le système d'aspiration des végétaux sur le convoyeur comporte en aval une chaussette avec des lames de retenue permettant une chute ralentie des végétaux.

Les végétaux tombent par la sortie avale à travers la chaussette équipée de lames semi-rigides, ces dernières étant étagés sur la hauteur de la chaussette. Les légumes roulent le long des lames disposés sensiblement perpendiculairement à la paroi de la chaussette et tombent d'étages de lames en étage de lames jusqu'au niveau de la zone de stockage.

Le dispositif de collecte 1 ainsi constitué permet de réaliser l'ensemble des étapes de collecte allant de la réception du légume coupé jusqu'à son stockage et limite par conséquent fortement le travail manuel et les risques de dégradation des légumes.

Bien entendu, d'autres caractéristiques de l'invention auraient également pu être envisagées sans pour autant sortir du cadre de l'invention définie par les revendications ci-après.

A titre d'exemple le dispositif de collecte 1 décrit dans la demande comprend deux unités de collecte 3 chaque unité de collecte 3 permettant de récolter les légumes sur sa voie, les deux unités de collecte 3 pouvant se partager un même convoyeur 8 ou transférer les légumes 25 sur deux convoyeurs 8 indépendants.

## Revendications

1. Dispositif de collecte de végétaux tels que des melons comportant un châssis (2), une unité de collecte (3), et des moyens d'assujettissement (4) aptes à permettre la liaison du châssis (2) à un véhicule agricole (5), ladite unité de collecte (3) comportant des moyens de guidage (6) des végétaux, des moyens de transfert (7) des végétaux sur un convoyeur et au moins un convoyeur (8), **caractérisé en ce que** le châssis (2) comprend des moyens de support (9) de l'unité de collecte (3), comportant une structure de sustentation (11) sur laquelle repose l'unité de collecte (3), ladite structure (11) comportant des bras supérieurs et inférieurs reliés par au moins un vérin permettant l'amortissement et le réglage en fonction de la charge de l'unité de collecte, permettant aux moyens de support de placer l'unité de collecte (3) en porte à faux de manière à limiter la force exercée par l'unité de collecte (3) sur le sol.

2. Dispositif de collecte de végétaux selon la revendication 1 dans lequel les moyens de transfert de végétaux comportent une rampe montée sur un axe pivot permettant son relèvement dans la direction opposée au déplacement du dispositif de collecte, en cas de butée de la rampe sur le sol.

3. Dispositif de collecte de végétaux selon l'une ou l'autre des revendications 1 et 2 dans lequel les moyens de guidage comportent au moins un patin apte à glisser sur le sol et des parois de guidage permettant de guider les végétaux vers la rampe.

4. Dispositif de collecte de végétaux selon la revendication 3 dans lequel les moyens de guidage comportent une liaison pivot avec l'unité de collecte et des moyens de réglage de la position angulaire des moyens de guidage permettant de cabrer les moyens de guidage par rapport au sol.

5. Dispositif de collecte de végétaux selon l'une ou l'autre des revendications 3 et 4 dans lequel les moyens de guidage comportent un seul patin, disposé entre les parois de guidage.

6. Dispositif de collecte de végétaux selon l'une quelconque des revendications précédentes comportant un système d'aspiration des végétaux sur le convoyeur apte à transférer les végétaux du convoyeur vers une zone de stockage telle qu'une benne.

7. Dispositif de collecte de végétaux selon la revendication précédente dans lequel le système d'aspiration des végétaux sur le convoyeur comporte en aval une chaussette avec des lames de retenue permettant une chute ralentie des végétaux.

## Patentansprüche

1. Vorrichtung zum Aufsammeln von Pflanzen, wie etwa Melonen, umfassend einen Rahmen (2), eine Sammeleinheit (3) und Befestigungsmittel (4), die geeignet sind, die Verbindung des Rahmens (2) mit einem landwirtschaftlichen Fahrzeug (5) zu ermöglichen, wobei die Sammeleinheit (3) Führungsmittel (6) für Pflanzen, Übertragungsmittel (7) für Pflanzen auf ein Förderband und mindestens ein Förderband (8) umfasst, **dadurch gekennzeichnet, dass** der Rahmen (2) Stützmittel (9) für die Sammeleinheit (3) umfasst, umfassend eine Tragstruktur (11), auf der die Sammeleinheit (3) aufliegt, wobei die Struktur (11) obere und untere Arme umfasst, die durch mindestens einen Zylinder verbunden sind, der die Dämpfung und die Einstellung in Abhängigkeit von der Ladung der Sammeleinheit ermöglicht, wodurch den Stützmitteln ermöglicht wird, die Sammeleinheit (3) freitragend anzuordnen, um die Kraft zu begrenzen, die durch die Sammeleinheit (3) auf den Boden ausgeübt wird.

2. Vorrichtung zum Aufsammeln von Pflanzen nach Anspruch 1, wobei die Übertragungsmittel von Pflanzen eine Rampe umfassen, die auf einer Drehachse montiert ist, die ihr Anheben in die der Fortbewegung der Vorrichtung zum Aufsammeln entgegengesetzte Richtung im Fall eines Anschlagens der Rampe auf dem Boden ermöglicht.

3. Vorrichtung zum Aufsammeln von Pflanzen nach dem einen oder dem anderen der Ansprüche 1 und 2, wobei die Führungsmittel mindestens eine Kufe umfassen, die geeignet ist, auf dem Boden zu gleiten, und Führungswände, die ein Führen der Pflanzen zu der Rampe ermöglichen.

4. Vorrichtung zum Aufsammeln von Pflanzen nach Anspruch 3, wobei die Führungsmittel eine Drehverbindung mit der Sammeleinheit und Mittel zum Einstellen der Winkelposition der Führungsmittel umfassen, die ein Hochziehen der Führungsmittel in Bezug auf den Boden ermöglichen.

5. Vorrichtung zum Aufsammeln von Pflanzen nach dem einen oder dem anderen der Ansprüche 3 und 4, wobei die Führungsmittel eine einzelne Kufe umfassen, die zwischen den Führungswänden angeordnet ist.

6. Vorrichtung zum Aufsammeln von Pflanzen nach einem der vorstehenden Ansprüche, umfassend ein System zum Ansaugen der Pflanzen auf das Förderband, das geeignet ist, die Pflanzen von dem Förderband in eine Lagerzone, wie etwa einen Kübel, zu übertragen.

7. Vorrichtung zum Aufsammeln von Pflanzen nach dem vorstehenden Anspruch, wobei das System zum Ansaugen der Pflanzen auf das Förderband stromabwärts einen Strumpf mit Haltelamellen umfasst, der einen verlangsamten Fall der Pflanzen ermöglicht.

## Claims

1. Device for collecting vegetables such as melons including a chassis (2), a collection unit (3), and securing means (4) capable of linking said chassis (2) to an agricultural vehicle (5), said collection unit (3) including means (6) for guiding the vegetables, means (7) for transferring the vegetables onto a conveyor and at least one conveyor (8), **characterised in that** said chassis (2) comprises means (9) for supporting said collection unit (3), including a bearing structure (11) on which said collection unit (3) rests, said structure (11) including upper and lower arms connected by at least one jack allowing for damping and adjustment according to the load of said collection unit, allowing said supporting means to place said collection unit (3) in a cantilevered fashion so as to limit the force exerted on the ground by said collection unit (3).

2. Device for collecting vegetables according to claim 1 wherein said means for transferring vegetables include a ramp mounted on a pivot axis allowing it to be raised in the direction opposite that in which the collection device is displaced, in the event that the ramp abuts against the ground.

3. Device for collecting vegetables according to either of claims 1 and 2 wherein said guide means include at least one glide capable of sliding on the ground and guide walls for guiding the vegetables towards said ramp.

4. Device for collecting vegetables according to claim 3 wherein said guide means include a pivot link with the collection unit and means for adjusting the angular position of said guide means allowing said guide means to be raised relative to the ground.

5. Device for collecting vegetables according to either of claims 3 and 4 wherein said guide means include a single glide, disposed between said guide walls.

6. Device for collecting vegetables according to any one of the preceding claims including a system for aspirating vegetables on the conveyor capable of transferring the vegetables from the conveyor to a storage area such as a trailer.

7. Device for collecting vegetables according to the preceding claim wherein said system for aspirating vegetables on the conveyor includes a downstream chute with retaining bars for slowing the fall of the vegetables.
